# EUROPEAN PATENT SPECIFICATION

(11) **EP 2 637 935 B1**
(45) Date of publication and mention of the grant of the patent: **27.05.2015**
(21) Application number: 11788275.3
(22) Date of filing: 09.11.2011
(51) Int. Cl.: B65B 35/40, B65B 57/16, B65G 19/02, B65G 47/08, B65G 47/71, B65G 47/82

(54) **APPARATUS AND METHOD FOR FORMING GROUPS OF ARTICLES ON A CONVEYOR**
VORRICHTUNG UND VERFAHREN ZUM FORMEN VON GRUPPEN VON ARTIKELN AUF EINEM FÖRDERER
APPAREIL ET PROCÉDÉ POUR FORMER DES GROUPES D' ARTICLES SUR UN CONVOYEUR

(30) Priority: 09.11.2010 GB 201018931
(43) Date of publication of application: 18.09.2013
(73) Proprietor: MeadWestvaco Packaging Systems, LLC, Richmond, VA 23219-0501 (US)
(72) Inventor: BONNAIN, Jean-Christophe, 36000 Chateauroux (FR); MARTINI, Pascal, 36330 Le Poinconnet (FR); POGET, Pierre-Yves, 79370 Celles-sur-Belle (FR)
(74) Representative: Rule, John Eric
(86) International application number: PCT/US2011/059860
(87) International publication number: WO 2012/121762

(56) References cited:
- EP-A1- 0 552 981
- US-A- 4 250 693
- US-A- 5 667 055

## Description

### FIELD OF THE INVENTION

The present invention relates generally to the field of apparatus for forming spaced articles or groups of articles on a conveyor belt for loading into packaging cartons and methods of operation of that apparatus. More specifically, though not exclusively, the present invention relates to packaging apparatus that is operable to split previously formed groups of articles into two or more smaller groups spaced from one another ready for loading into such packaging cartons.

### BACKGROUND OF THE INVENTION

In the packaging industry it is desirable that articles be disposed upon a conveyor at a regular pitch, each article or group of articles then being more easily transferred into a packaging carton for successive packaging operations. Articles initially begin In a continuous stream and require manipulation in order to bring them into an arrangement of such spaced groups, and this manipulation requires the employment of one or more packaging apparatuses. The potential throughput of these apparatuses is linked to the group size that they are intended to process and it is therefore desirable that the group sizes are kept as large as possible to maintain a high throughput rate. Presently, a packaging apparatus that is intended to provide a given group size is required to manipulate articles from a continuous stream into that given group size via, for example, lifting desired quantities of articles to form a group sequentially from a first conveyor and transferring them onto a separate conveyor, or by accelerating that desired number of articles to form a spaced group on the same conveyor. This leads to an increase in the throughput requirements of the apparatus, which apparatus usually requires one or more moveable tools that operate around the track and are operated by, for example, some form of actuator to engage with and subsequently manipulate those groups of articles.

The present Invention seeks to provide a packaging apparatus that is advantageous in that it provides a simpler and more robust means of providing a desired stream of spaced articles or groups of articles on a conveyor.

### SUMMARY OF INVENTION

The present invention seeks to overcome or at least mitigate the problems of the prior art.

A first aspect of the present invention provides an apparatus comprising a metering conveyor for conveying an initial selection of articles in a first direction at a first speed, a first flight bar and a second flight bar, and drive means for driving the first and second flight bars, wherein the first and second flight bars extend across a portion of the conveyor and are arranged at an offset from one another transversely to the first direction, the apparatus being operable to bring the first flight bar into abutment with a first portion of the initial selection of articles, thereby to convey them at a second speed to form a first group of one or more articles, and operable to bring the second flight bar into abutment with a second portion of the initial selection of articles, thereby to convey them at said second speed to form a second group of one or more articles, which first and second groups of articles are offset from one another in said first direction.

Preferably, the first flight bar extends from a first lug chain arrangement provided alongside a first side of the metering conveyor and the second flight bar extends from a second lug chain arrangement provided along a second side, opposite the first side, of the metering conveyor.

Preferably, the first flight bar and the second flight bar are driveable independently of one another.

Preferably, the flight bars are configured to allow them to pass one another, in said first direction, without fouling one another.

Preferably, the metering conveyor comprises a first part and a second part synchronised with one another to provide, together, a conveying surface to convey the initial selection of articles, and wherein the first lug chain arrangement comprises a chain along either side of the first part, and the second lug chain arrangement comprises a chain along either side of the second part.

Preferably, the apparatus further comprises an infeed of articles, from which said initial selection of articles is made, which initial selection of articles is engaged and transferred onto the metering conveyor from said infeed, to be conveyed thereby at said first speed.

Preferably, the apparatus further comprises an additional conveyor disposed parallel to and adjacent to one side of the metering conveyor and a loading station that is operable to transfer the groups of one or more articles from the metering conveyor onto the additional conveyor.

Preferably, the loading station comprises a loading arm that is operable to abut and subsequently move the second group of one or more articles transverse to the first direction, until that loading arm abuts the first group of one or more articles, and to move both the first and second groups of one or more articles off an adjacent edge of the metering conveyor.

Preferably, the loading arm is operable to move in said first direction such that the movement of the first and second groups of one or more articles transverse to said first direction is relative to the first and second lugs.

Preferably, the first and second flight bars are provided, respectively, by a first series of flight bars on a first lug chain arrangement and a second series of flight bars on a second lug chain arrangement, successive flight bars of those first and second lug chain arrangements being operable to convey successive first and second groups of one or more articles to form streams of each of said first and second groups of one or more articles over the metering conveyor.

A second aspect of the present invention provides a method for forming spaced groups of articles on a conveyor, which method comprises conveying an initial selection of articles at a first speed, and driving a first flight bar at a second speed into abutment with a first portion of that selection of articles, thereby to convey that first portion at said second speed, and driving a second flight bar at that second speed into abutment with a second portion of that selection of articles, thereby to convey that second portion at said second speed, thereby to arrive at two groups of articles, conveyed at said second speed, offset in the direction of motion thereof.

A third aspect of the present invention provides a method of loading articles into cartons, which method comprises conveying articles in a first stream and a second stream upon a conveyor, the articles forming the each of the first stream and the second stream being spaced from one another, and the first stream being arranged relative to the second stream such that the articles thereof are offset from those of the second stream relative to the direction in which those streams are conveyed, the method further comprising accelerating an article in the second stream transversely to said direction, thereby to interpose it between adjacent articles in the first stream, and accelerating both said article in the second stream and an adjacent article in the first stream off an adjacent edge of the conveyor.

### BRIEF DESCRIPTION OF THE DRAWINGS

Exemplary embodiments of the invention will now be described with reference to the accompanying drawings, in which:
- FIGURES 1 to 4: illustrate sequential plan views of a loading operation being carried out by selected elements of an apparatus according to a first embodiment of the present invention;
- FIGURE 5: illustrates an enlarged view of selected elements of the apparatus of Figure 1;
- FIGURE 6: illustrates an elevation of a packaging apparatus according to the preferred embodiment of Figure 1; and
- FIGURES 7 and 8: illustrate enlarged views of the packaging apparatus illustrated in Figure 6.

### DETAILED DESCRIPTION OF EXEMPLARY EMBODIMENTS OF THE PRESENT INVENTION

Detailed descriptions of specific embodiments of the apparatus and methods of operation thereof are disclosed herein. It will be understood that the disclosed embodiments are merely examples of the way in which certain aspects of the invention can be implemented and do not represent an exhaustive list of all of the ways the invention may be embodied. Indeed, it will be understood that the apparatus and methods of operation thereof described herein may be embodied in various and alternative forms. The Figures are not necessarily to scale and some features may be exaggerated or minimised to show details of particular components. Well-known components, materials or methods are not necessarily described in great detail in order to avoid obscuring the present disclosure. Any specific structural and functional details disclosed herein are not to be interpreted as limiting, but merely as a basis for the claims and as a representative basis for teaching one skilled in the art to variously employ the invention.

The present invention relates to an apparatus for splitting a group of articles of a first size into two or more groups of smaller size(s). Preferably, the apparatus comprises two or more moveable lugs, or protrusions of some kind, driveable independently of one another such that a first, and then subsequently a second, thereof is moveable into abutment with one or more articles of the group articles and conveying that or those articles away from the remaining articles of that group of articles, thereby to form a new, smaller group (single articles are considered, in this context, as a group of unitary size).

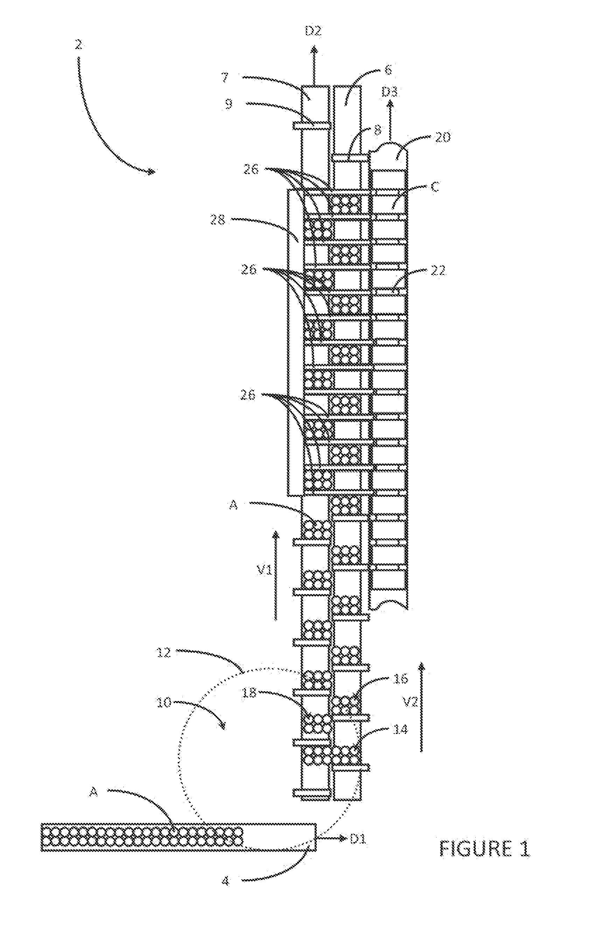

Referring to Figure 1 there is shown a schematic view of an apparatus 2 capable of accepting an input stream of articles A such as, amongst others, bottles or cans. This stream is conveyed upon an input conveyor 4, and preferably comprises dual lanes of articles A in successive side-by-side rows. Preferably, the input conveyor 4 comprises a moving surface upon which the articles A may be disposed, such as a conveyor belt, having a return path that the conveyor 4 follows after the articles A have been removed therefrom in the manner described below. Alternatively, the input conveyor 4 may consist of lug chain arrangements 8, 9 that are driven to each slide one or more articles A over a surface, thereby to form the stream of articles A. This stream of articles A passes, near a terminal end thereof, a working reach of a carousel tool 10. This carousel tool 10 is operable to engage with successive groups of articles A selected from the input stream on the input conveyor 4, and to lift those articles A so-engaged to remove them from the input conveyor 4 and to transfer them to a position over a first metering conveyor 6 and a second metering conveyor 7. As these engaged articles A are being transferred, they are preferably rotated to enter a desired orientation relative to that of the metering conveyors 6, 7. Preferably, as illustrated, the metering conveyors 6, 7 extend away at substantially a right angle to the input conveyor 4 and the group 14 of articles A engaged by the carousel tool 10 is rotated to ensure that, when disposed over the metering conveyors 6, 7, it's length extends across the width of the metering conveyors 6, 7.

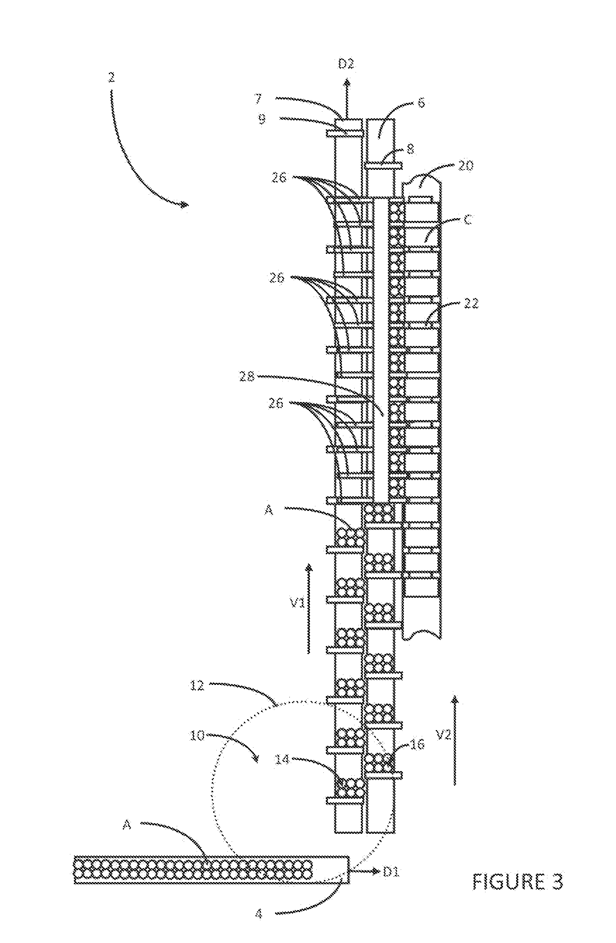

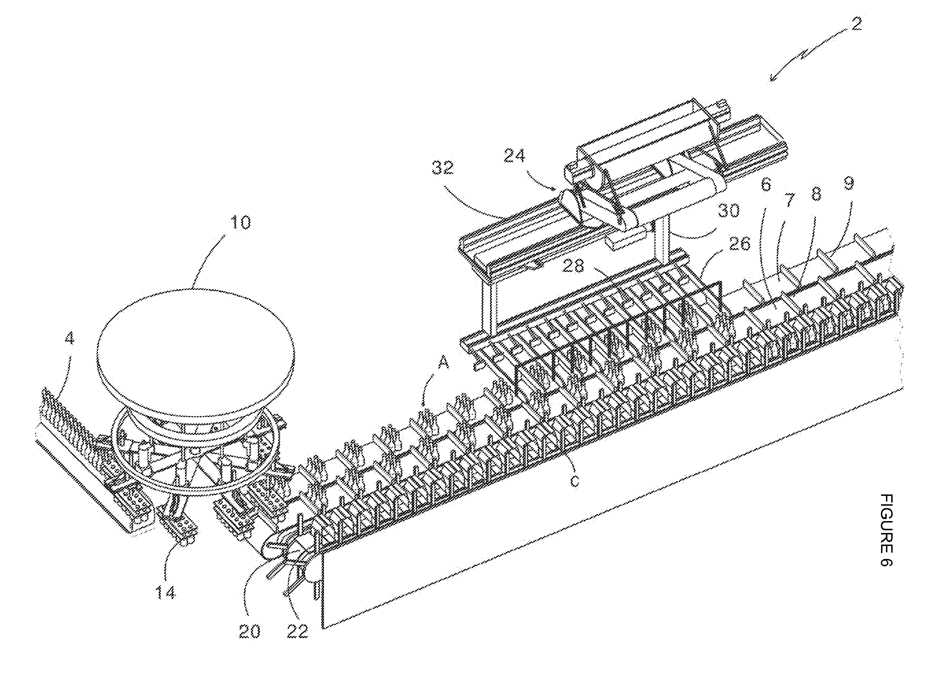

Preferably, the carousel tool 10 comprises means for engaging one or more articles A from the input conveyor 4 through some releasable means such as, amongst others, mechanical gripping means or suction heads. This carousel tool 10 is not shown in detail in Figures 1 to 5, and is instead depicted as an area of working reach 12. The carousel tool 10 itself is best shown in Figure 6. Having engaged a desired number of articles (in the illustrated embodiment an array of 2x6 articles) this group 14 is transferred off the input conveyor 4 without fouling the articles remaining on the input conveyor 4, preferably through an upward movement that clears bottom portions of that group of articles A from top portions of the articles A upstream thereof on the input conveyor 4. The group 14 is then transferred over to the metering conveyors 6, 7 as described above and below. The carousel tool 10 comprises drive means such as, amongst others, electric motors including servo motors, or pneumatic or hydraulic pistons. One example of a suitable carousel tool 10 is that of the "robotic divider" described in International Publication Number WO2009114332. The carousel tool 10 is operated at sufficient speed, relative to that of the input stream of articles A, to ensure that each article A of that stream is engaged and transferred to the metering conveyors 6, 7 before reaching a terminal point of the input conveyor 4.

So disposed, at a desired position and orientation over the metering conveyors 6, 7, the engaged group 14 of articles A is then lowered, by the carousel tool 10, down onto upper surfaces of the metering conveyors 6, 7. The group 14 of articles A is then disengaged by the carousel tool 10 such that the group of articles A is freed to be conveyed by the metering conveyors 6, 7. Optionally, the carousel tool 10 may be configured to create a space between articles of the group 18 that are intended to border, when disposed on the metering conveyors 6, 7, the edges of those metering conveyors 6, 7. This optional feature of the apparatus is preferably achieved by providing combs for engaging the articles A from the infeed conveyor 4 that have an extended concave profile for receiving an article A that will so-border an edge of one of the metering conveyors 6, 7. This extended profile provides an angled abutment surface that urges the article A away from an adjacent article A that will border an adjacent edge of the other of the metering conveyors 6, 7. The spacing between the adjacent articles A that border the adjacent edges of the metering conveyors 6, 7 is advantageous in that it reduces the opportunity for those articles A to fall from those edges into a gap between the metering conveyors 6, 7. The gap is preferably too small for the articles A to be physically passed between the two metering conveyors 6, 7, but may still be large enough to cause displacement of an article A that was to partially topple into the gap.

The metering conveyors 6, 7 are parallel to one another and driven by a common drive means such as, amongst others, a servo motor, AC motor or DC motor. Preferably, the metering conveyors 6, 7 provide means for conveying articles A disposed thereupon in a similar manner to the input conveyor 4. Each metering conveyor 6, 7 is preferably a conveyor belt having an upper surface, upon which a portion of the group 14 of articles A is disposed, which upper surface is driven by the drive means (not shown) at a first speed V1. The articles A disposed on that upper surface are thereby conveyed at speed V1. A preferably narrow gap between the first metering conveyor 6 and the second metering conveyor 7 ensures that articles A from the group 14 disposed either side thereof are at least sufficiently well supported so as to remain stable upon the respective upper surface.

Preferably, first 8 and second 9 lug chain arrangements are provided, respectively, for the first and second metering conveyors 6, 7. These lug chain arrangements 8, 9 are each comprised of an endless chain each side of the respective metering conveyor 6, 7 that follows a path at a constant offset from an adjacent edge of the upper surface of that respective metering conveyor 6, 7, before following a return path. Disposed at preferably regular spacings along each chain are lugs between which extend flight bars over an adjacent surface of the respective metering conveyor 6, 7. In this manner the flight bars each sweep, as the lug chain arrangement 8, 9 is driven, across the proximate surface of the respective metering conveyor 6, 7. The flight bars each provide a leading surface for abutting articles A disposed on the metering conveyors 6, 7 and connecting means at either end to connect them to the lug chain arrangements 8, 9. The two lug chain arrangements 8, 9 each comprise a drive means such as, amongst others, a servo motor, AC motor or DC motor and, preferably, are each driveable independently of one another. The lug chain arrangements 8, 9 are configured, along their juxtaposed sides, to allow the flight bars of the first lug chain arrangement 8 to pass the flight bars of the second lug chain arrangement 9 without fouling one another when the two are driven past each other. Preferably, the first 8 and second 9 lug chain arrangements are each driven at a second speed V2 along the respective length of the first 6 and second 7 metering conveyors. This second speed V2 is greater than the first speed V1.

The group 14 of articles A released from the carousel tool 10 upon the metering conveyor 6 are preferably disposed at an offset from the flight bars of each of the first 8 and second 9 lug chain arrangements and are conveyed by the upper surface of the metering conveyor 6 at the first speed V1 thereof. Due to the speed difference (equal to V2 minus V1) between the lug chain arrangements 8, 9 and the metering conveyor 6, a proximate flight bar of one of the lug chain arrangements 8, 9 (in the illustration of Figure 1, this is the first lug chain arrangement 8) moves into abutment with a trailing edge of a first portion of the group 14 of articles A, disposed upon the first metering conveyor 6. Through this abutment, that portion of the group 14 is accelerated to the second speed V2 of the lug chain arrangements 8, 9, and moves away from the remaining articles A of the group 14 disposed upon the second metering conveyor 7, at a speed equal to the difference between the first V1 and second V2 speeds.

A flight bar from the second lug chain arrangement 9 moves into abutment with the portion of the group 14 disposed upon the second metering conveyor 7 and, through this abutment, conveys that remaining portion at the second speed V2 over the second metering conveyor 7 to form a second group 18.

The original group 14 of articles A is thereby split into two groups: a first group 16 that is in abutment with, and conveyed by, the first lug chain arrangement 8 over the surface of the first metering conveyor 6; and a second group 18 that is in abutment with, and conveyed by, the second lug chain arrangement 9 over the surface of the second metering conveyor 7.

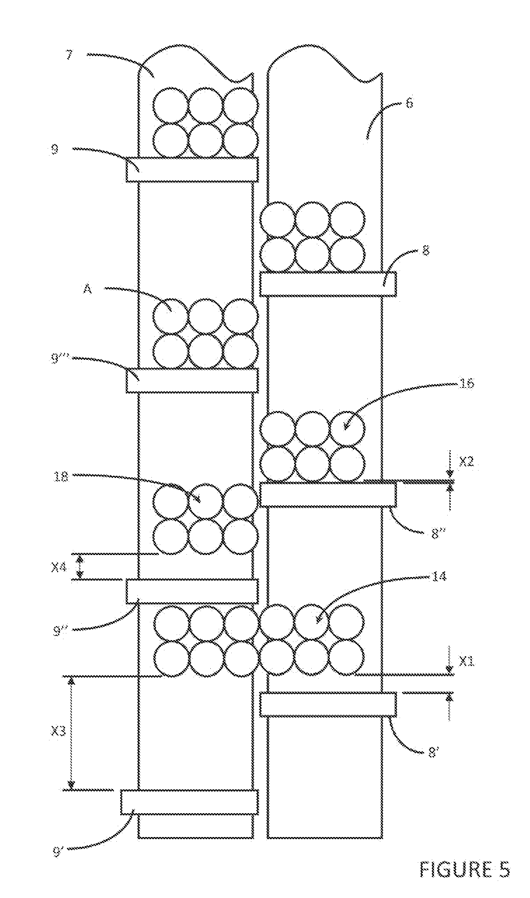

The foregoing process of transfer of groups of articles from the input conveyor 4 and subsequent splitting and conveying of those articles A by flights bars of the first and second lug chains 8, 9 is illustrated best In Figure 5, wherein the initial offset between the original group 14 of articles A and the proximate flight bar 8' of the first lug chain arrangement 8 is referenced by X1. As illustrated, the difference in speed between the flight bars of the first lug chain arrangement 8 and the group 14 on the metering conveyor 6 closes this offset to zero, as referenced at X2. A preceding first group 16 is shown being conveyed by a preceding flight bar 8" of the first lug chain arrangement 8. The Figure also illustrates the initial offset X3 between the group 14 of articles A, as they are placed on the second metering conveyor 7, from a proximate downstream flight bar 9' of the second lug chain arrangement 9. This initial offset X3 is decreased as the flight bars of the second lug chain arrangement 9 close upon the articles A disposed upon the second metering conveyor 7, and a flight bar 9" of the first lug chain arrangement 9 is shown at a second, smaller offset X4 from the a preceding second group of articles 18, resting on the second metering conveyor 7. A further flight bar 9"' is shown at a point after which it has moved into abutment with a preceding second group 18 on the second metering conveyor 7, thereby to convey them at the second speed V2.

The flight bars of the first 8 and second 9 lug chain arrangements have the same pitch between adjacent flight bars thereof and the two lug chain arrangements 8, 9 are arranged relative to one another, such that the flight bars are staggered relative to the length of the metering conveyors 6, 7. Thus, the aforementioned first 16 and second 18 groups are conveyed in a staggered manner relative to a longitudinal axis of the metering conveyors 6, 7. The pitch between the flight bars of each lug chain arrangement 8, 9 is at least double the dimension of the groups 16, 18 in the direction of travel D2 of the metering conveyor 6 so as to allow the second groups 18 to slide between a leading edge of an adjacent first group 16 and a trailing edge of a preceding flight bar of the first lug chain arrangement 8 in the manner described below.

So conveyed by the metering conveyor 6, and subsequently each of the lug chain arrangements 8, 9, the first 16 and second 18 groups travel along the metering conveyor 6 to a loading station (described below) alongside a carton conveyor 20. The foregoing process is repeated to create two streams of grouped articles, a first of which comprises successive ones of the first groups 16 on the first metering conveyor 6, and the second comprising successive ones of the second groups 18 disposed on the second conveyor.

The carton conveyor 20 comprises a conveyor surface similar to the metering conveyors 6, 7 that is driven by a drive means (not shown). This drive means is preferably, amongst others, one of a servo motor, DC motor or AC motor. Extending from an upper surface of the carton conveyor 20 are a series of carton lugs 22 that, between them, accommodate a stream of partially erected cartons C.

It is envisaged that cartons C may be passed onto the carton conveyor 20 by a preceding apparatus or by some other means (not shown) capable of providing cartons C at a desired rate. For example, a carton erecting apparatus fed by a hopper or magazine of carton blanks could be provided that disposes cartons, erected into tubular configuration, onto the carton conveyor 20.

Each carton C is preferably in a tubular condition and is opened at, at least, an end thereof adjacent the first metering conveyor 6. The carton conveyor 20 conveys the cartons C in a direction D3 parallel to the first metering conveyor 6 at the second speed V2 of the lug chain arrangements 8, 9. The lug chain arrangements 8, 9 and the carton conveyor 20 are synchronised so as to ensure alignment between the groups 16, 18 conveyed by the lug chain arrangements 8, 9 and the cartons C relative to a transverse axis D3 of the metering 6, 7 and carton 20 conveyors.

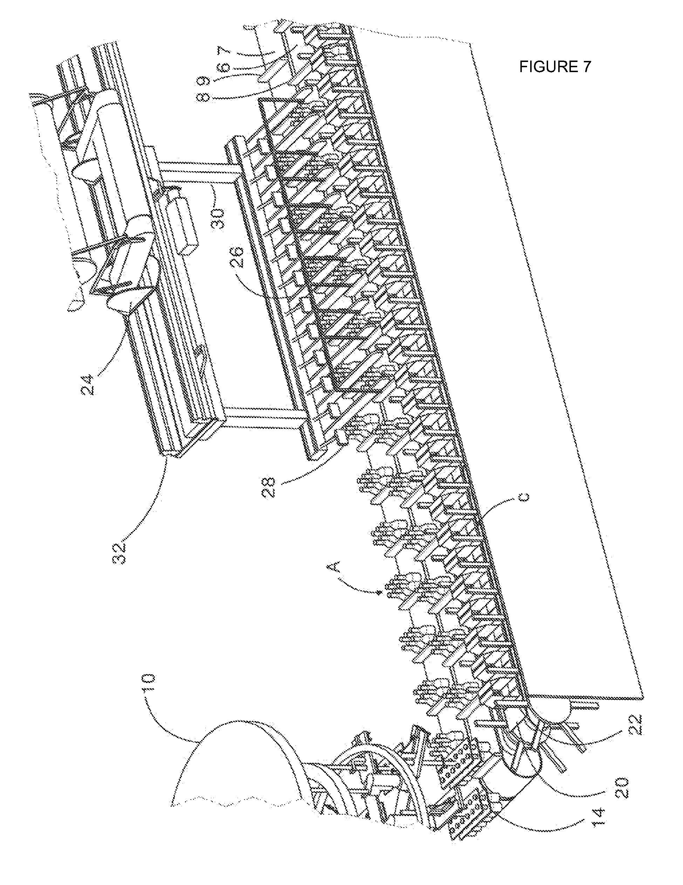

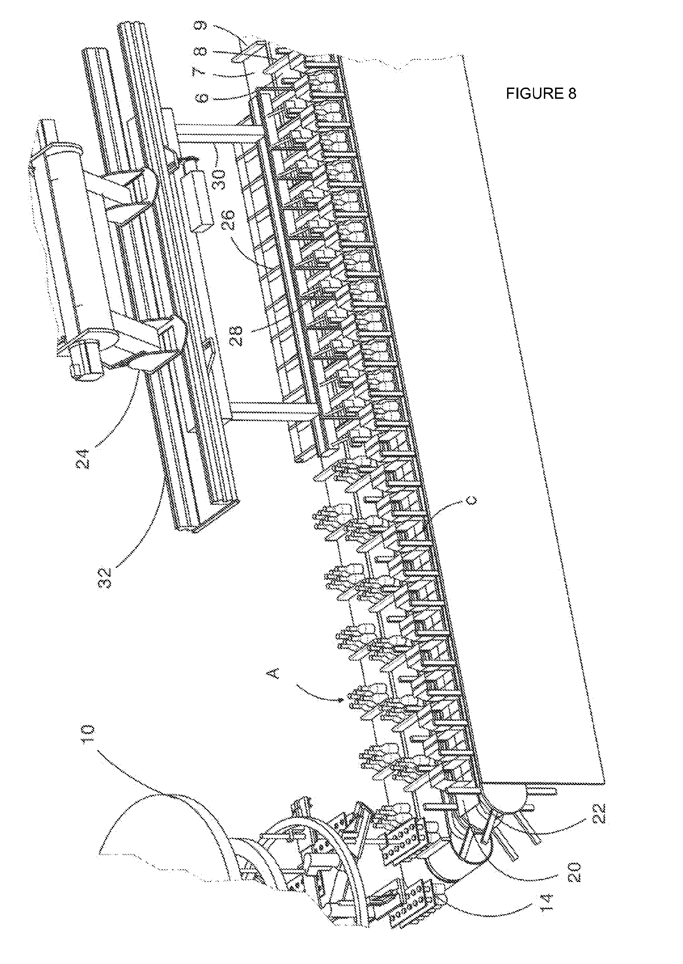

As best shown in plan view in Figures 1 to 4, and in elevated view in Figures 7 and 8, as the groups 16, 18 reach the loading station, a loading tool 24 is brought down over and around the leading groups 16, 18. The loading tool 24 comprises guide arms 26 that are located over the flight bars of the lug chain arrangements 8, 9. Plungers 28 are slidably engaged with the guide arms 26 and a drive means of the loading tool 24 is operable to slidably extend those plungers 28 therealong so as to abut, and subsequently accelerate, the groups 16, 18 of articles A transversely to their initial direction of motion D2 on the metering conveyors 6, 7. The plungers 28 are driven by a drive means (not shown) that preferably comprises one or more of, amongst others, a servo motor, DC motor, AC motor, hydraulic motor, hydraulic piston or pneumatic piston. Each plunger 28 has an abutment surface that contacts adjacent portions of the surfaces of adjacent ones of the articles A forming the groups 16, 18, and subsequently accelerates them. The plungers 28 and guides 26 are each connected to an armature 30 that extends parallel to the length of the metering conveyors 6, 7 and which is slidably engaged with an articulated support 32 that comprises one or more drive means to provide for precise positioning of the armature 30 over and around the groups 16, 18 of articles A to be loaded into the cartons C.

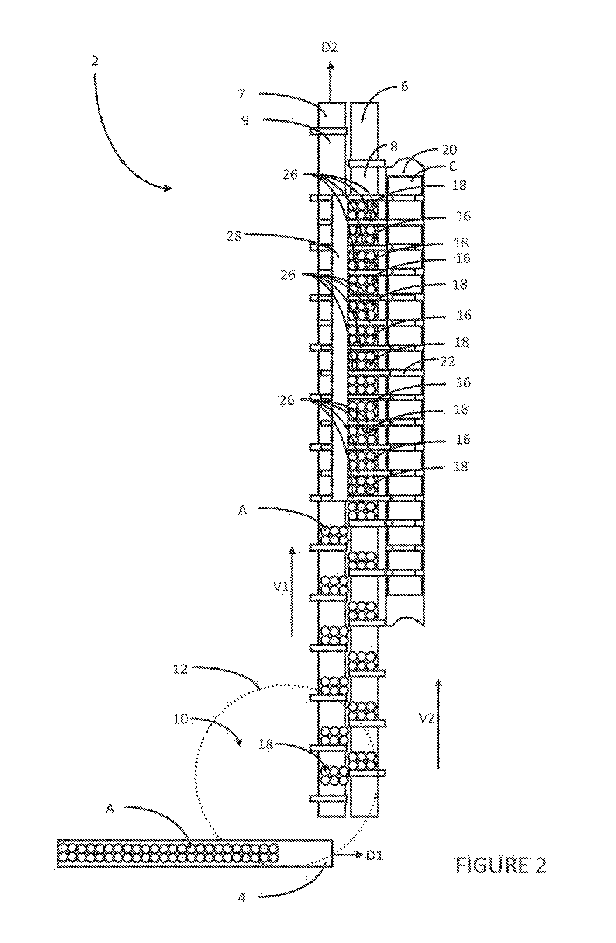

The support 32 is operable to slide the armature 30 reciprocally therealong in the direction D2 of the length of the metering conveyors 6, 7 at the second speed V2 of the lug chain arrangements 16, 18. In this fashion the guide arms 26, extending substantially perpendicularly from that armature 30, maintain alignment over the flight bars of the first 8 and second 9 lug chain arrangements without fouling the groups 16, 18 of articles A as those groups 16, 18 are conveyed. The plungers 28 are extended along the guides 26 as the armature 30 slides relative to the support 32 such that the groups of articles 16, 18 are slid along the proximate upstream guide arm 26 from their initial position to the far edge of the metering conveyor 6 and beyond, into an aligned carton C on the carton conveyor 20, as is best shown in plan view in Figures 2 to 4 and in elevation view in Figures 7 and 8. This process requires pushing selected ones of the second groups 18 disposed on the second metering conveyor 7 off a side edge thereof and onto the adjacent edge of the first conveyor 6 (as best shown in Figure 2). The pitch between successive ones of the first groups 16 on the first metering conveyor 6 is sufficient to accommodate the interposition of the selected second groups 18 therebetween. The gap between the first 6 and second 7 metering conveyors is minimised to facilitate transfer of the second groups 18 from the second metering conveyor 7 onto the first metering conveyor 6. Any gap between the upper surfaces of the first metering conveyor 6 and the carton conveyor 20 is minimised to reduce disturbance of the articles A as the groups 16, 18 are transferred thereacross. Preferably, an unsecured end flap of each carton C may bridge across any gap between the two conveyors 6, 20 to provide a surface over which the groups 16, 18 may slide as they are loaded into the cartons C.

It will be appreciated that during the loading process the groups 16, 18, once abutted by the plungers 28, have a first velocity component V2 in the direction of travel of the lug chain arrangements 8, 9 and a second velocity component transverse thereto parallel to the lengths of the guides 26. The first velocity component V2 is caused through abutment of those articles A with a leading surface of an upstream one of the guide arms 26.

Preferably, a buffer (not shown) may be provided for each carton C, which buffer articulates to a buffering position at a furthest end of the cartons C from the metering conveyor 6 and acts as an abutment surface, into abutment with which leading articles of the groups 16, 18 may be brought to halt their movement transverse to the direction of motion of the cartons C, thereby to prevent those leading articles A falling out of the furthest end of the cartons C.

Once the loading of the cartons C has been completed by the plungers 28, they are retracted back along the guides 26 to their initial unextended positions and the armature 30 is lifted to clear upstream groups 16, 18 of articles A conveyed by subsequent flight bars of the lug chain arrangements 16, 18.

The above process continues, with the carousel tool 10 returning to engage and transfer successive groups 18 of articles A from the input conveyor 4 to the metering conveyor 6, and with the loading station pushing successive groups 16, 18 of articles A, in batches, into the corresponding number of cartons C on the carton conveyor 20.

In the foregoing description the original groups 14 of articles A are 2x6 arrays and these become divided into equally sized first 16 and second 18 groups of 2x3 arrays. These array sizes may be altered as required by changing the carousel tool where needed to allow it to engage differing sized arrays of articles and by altering the pitch between adjacent flight bars on the lug chain arrangements 8,9.

It is contemplated that the lug chain arrangements 8, 9 may be driven independently of one another to allow the flight bars thereof to be aligned when so desired so as to convey groups of articles A without the aforementioned division. It is further contemplated that the flight bars of the lug chain arrangements 8, 9 may not be identical to one another.

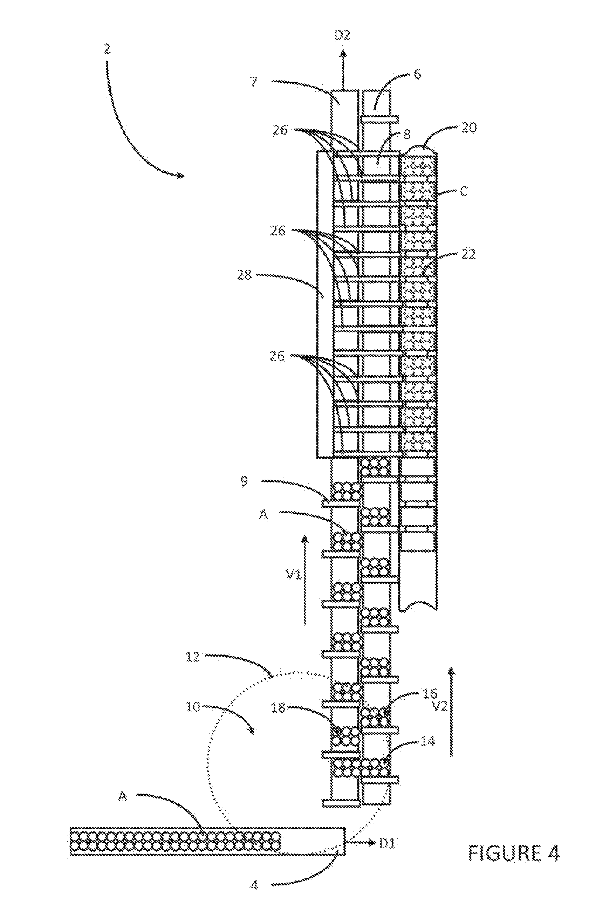

Once the plungers 28 have been fully extended along the guides 26, the groups 16, 18 are fully loaded into the cartons C, which loaded cartons C are then conveyed onwards by the carton conveyor 20 for subsequent packaging operations such as end panel closure and labelling, as best shown in Figure 4.

The apparatus 2 according to the first preferred embodiment is illustrated in Figure 6, which Figure shows orientation of the carousel tool 10 and the loading tool 24 relative to the conveyors 4, 6, 7, 20.

It can be appreciated that various changes may be made within the scope of the present invention. For example, the size and shape of the panels and apertures may be adjusted to accommodate articles of differing size or shape. In other embodiments of the invention it is envisaged that alternative transfer mechanisms may be utilized to transfer groups of articles to the metering conveyor. These alternative transfer mechanisms may include, amongst others, robotic arms fitted with tool heads for engaging multiple articles simultaneously and operable to transfer those articles in groups. A further alternative transfer mechanism that may be utilized is a relatively high throughput pick-and-place manipulator for transferring articles from an infeed conveyor to the metering conveyor in smaller or unitary batches to build up, following successive transfer operations, the original group upon the metering conveyor.

It is further envisaged that the above described metering conveyor and lug chain arrangements may be employed without the loading station. The groups of articles are alternatively passed to a subsequent packaging operation such as, for example, labeling of application of wraparound carton thereto. Similarly, it is envisaged that the loading arm described above may be utilized separately from the metering conveyor and lug chain arrangements. It is envisaged that streams of staggered groups of articles formed by some other means may be loaded onto a separate conveyor, such as the carton conveyor described above, by the loading arm.

Alternative embodiments of the invention provide a greater number of lug chain arrangements so as to provide for the division of an initial group of articles into three or more metered groups, each staggered in the manner described above. In such embodiments, additional metering conveyors are disposed adjacent to the first or the second metering conveyors and each possess an additional lug chain arrangement for driving additional flight bars, the carousel tool being configured to dispose the initial group of articles across these additional metering conveyors in addition to the first and second metering conveyors.

The number of groups that the loading arm is operable to load onto a parallel conveyor, such as a carton conveyor, may be altered as desired, and as necessary to give a desired throughput. This may be effected through the provision of more, or less, guide arms and associated plungers than the preferred embodiment described above. Additionally, it is envisaged that different designs of tool heads may be employed to allow engagement of different articles from the infeed conveyor.

It will be recognised that as used herein, directional references such as "top", "bottom", "front", "back", "end", "side", "inner", "outer", "upper" and "lower" do not limit the respective panels to such orientation, but merely serve to distinguish these panels from one another.

## Claims

1. An apparatus comprising a metering conveyor for conveying an initial selection of articles in a first direction at a first speed, a first flight bar and a second flight bar, and drive means for driving the first and second flight bars, wherein the first and second flight bars extend across a portion of the conveyor and are arranged at an offset from one another transversely to the first direction, the apparatus being operable to bring the first flight bar into abutment with a first portion of the initial selection of articles, thereby to convey them at a second speed to form a first group of one or more articles, and operable to bring the second flight bar into abutment with a second portion of the initial selection of articles, thereby to convey them at said second speed to form a second group of one or more articles, which first and second groups of articles are offset from one another in said first direction.

2. The apparatus according to claim 1, wherein the first flight bar extends from a first lug chain arrangement provided alongside a first side of the metering conveyor and the second flight bar extends from a second lug chain arrangement provided along a second side, opposite the first side, of the metering conveyor.

3. The apparatus according to claim 1 or claim 2, wherein the first flight bar and the second flight bar are driveable independently of one another.

4. The apparatus according to any one of claims 1 to 3, wherein the flight bars are configured to allow them to pass one another, in said first direction, without fouling one another.

5. The apparatus according to any one of claims 1 to 4 wherein the metering conveyor comprises a first part and a second part synchronised with one another to provide, together, a conveying surface to convey the initial selection of articles, and wherein the first lug chain arrangement comprises a chain along either side of the first part, and the second lug chain arrangement comprises a chain along either side of the second part.

6. The apparatus according to any one of claims 1 to 5 further comprising an infeed of articles, from which said initial selection of articles is made, which initial selection of articles is engaged and transferred onto the metering conveyor from said infeed, to be conveyed thereby at said first speed.

7. The apparatus according to any one of claims 1 to 6, further comprising an additional conveyor disposed parallel to and adjacent to one side of the metering conveyor and a loading station that is operable to transfer the groups of one or more articles from the metering conveyor onto the additional conveyor.

8. The apparatus according to claim 7, wherein the loading station comprises a loading arm that is operable to abut and subsequently move the second group of one or more articles transverse to the first direction, until that loading arm abuts the first group of one or more articles, and to move both the first and second groups of one or more articles off an adjacent edge of the metering conveyor.

9. The apparatus according to claim 8, wherein the loading arm is operable to move in said first direction such that the movement of the first and second groups of one or more articles transverse to said first direction is relative to the first and second lugs.

10. The apparatus according to any one of claims 1, to 9 wherein the first and second flight bars are provided, respectively, by a first series of flight bars on a first lug chain arrangement and a second series of flight bars on a second lug chain arrangement, successive flight bars of those first and second lug chain arrangements being operable to convey successive first and second groups of one or more articles to form streams of each of said first and second groups of one or more articles over the metering conveyor.

11. A method for forming spaced groups of articles on a conveyor, which method comprises conveying an initial selection of articles at a first speed, and driving a first flight bar at a second speed into abutment with a first portion of that selection of articles, thereby to convey that first portion at said second speed, and driving a second flight bar at that second speed into abutment with a second portion of that selection of articles, thereby to convey that second portion at said second speed, thereby to arrive at two groups of articles, conveyed at said second speed, offset in the direction of motion thereof.

12. A method of loading articles into cartons, which method comprises conveying articles in a first stream and a second stream upon a conveyor, the articles forming the each of the first stream and the second stream being spaced from one another, and the first stream being arranged relative to the second stream such that the articles thereof are offset from those of the second stream relative to the direction in which those streams are conveyed, the method further comprising accelerating an article in the second stream transversely to said direction, thereby to interpose it between adjacent articles in the first stream, and accelerating both said article in the second stream and an adjacent article in the first stream off an adjacent edge of the conveyor.

## Patentansprüche

1. Vorrichtung, die eine Dosier-Fördereinrichtung zum Fördern einer Vorauswahl von Gegenständen in einer ersten Richtung bei einer ersten Geschwindigkeit umfasst, wobei die Fördereinrichtung einen ersten Schwungriegel, einen zweiten Schwungriegel sowie eine Antriebseinrichtung zum Antrieb des ersten und zweiten Schwungriegels umfasst, wobei sich der erste und der zweite Schwungriegel über einen Abschnitt der Fördereinrichtung erstrecken und versetzt im Verhältnis zueinander sowie quer zu der ersten Richtung angeordnet sind, wobei die Vorrichtung betätigbar ist, um den ersten Schwungriegel in eine anstoßende Beziehung mit einem ersten Abschnitt der Vorauswahl von Gegenständen zu bringen, um sie bei einer zweiten Geschwindigkeit zu fördern, so dass sie eine erste Gegenstandsgruppe ausbilden, die aus einem oder mehreren Gegenständen besteht, und wobei die Vorrichtung betätigbar ist, um den zweiten Schwungriegel in eine anstoßende Beziehung mit einem zweiten Abschnitt der Vorauswahl von Gegenständen zu bringen, um sie bei einer zweiten Geschwindigkeit zu fördern, so dass sie eine zweite Gegenstandsgruppe ausbilden, die aus einem oder mehreren Gegenständen besteht, wobei die erste Gegenstandsgruppe und die zweite Gegenstandsgruppe in der ersten Richtung versetzt zueinander sind.

2. Vorrichtung nach Anspruch 1, wobei sich der erste Schwungriegel von einer ersten Nasen-Kettenanordnung erstreckt, die entlang einer ersten Seite der Dosier-Fördereinrichtung angeordnet ist, und der zweite Schwungriegel sich von einer zweiten Nasen-Kettenanordnung erstreckt, die entlang einer zweiten Seite der Dosier-Fördereinrichtung gegenüber deren ersten Seite angeordnet ist.

3. Vorrichtung nach einem der Ansprüche 1 oder 2, wobei der erste Schwungriegel und der zweite Schwungriegel unabhängig voneinander antreibbar sind.

4. Vorrichtung nach einem der Ansprüche 1 bis 3, wobei die Schwungriegel so hergerichtet sind, dass sie einander in der ersten Richtung passieren können, ohne sich gegenseitig zu behindern.

5. Vorrichtung nach einem der Ansprüche 1 bis 4, wobei die Dosier-Fördereinrichtung einen ersten Abschnitt und einen zweiten Abschnitt umfasst, die miteinander synchronisiert sind, um gemeinsam eine Förderfläche bereitzustellen, um die Vorauswahl von Gegenständen zu fördern, und wobei die erste Nasen-Kettenanordnung eine Kette entlang jeder Seite des ersten Abschnitts umfasst und die zweite Nasen-Kettenanordnung eine Kette entlang jeder Seite des zweiten Abschnitts umfasst.

6. Vorrichtung nach einem der Ansprüche 1 bis 5, wobei die Vorrichtung weiterhin eine Zufuhr von Gegenständen umfasst, aus der die Vorauswahl von Gegenständen gebildet wird und die auf der Dosier-Fördereinrichtung in Eingriff genommen wird, um von dieser bei jener ersten Geschwindigkeit gefördert zu werden.

7. Vorrichtung nach einem der Ansprüche 1 bis 6, wobei die Vorrichtung weiterhin eine zusätzliche Fördereinrichtung umfasst, die parallel und angrenzend zu einer Seite der Dosier-Fördereinrichtung angeordnet ist, sowie eine Ladestation, die betätigbar ist, um Gruppen, die aus einem oder mehreren Gegenständen bestehen, von der Dosier-Fördereinrichtung auf die zusätzliche Fördereinrichtung zu fördern.

8. Vorrichtung nach Anspruch 7, wobei die Ladestation einen Ladearm umfasst, der betätigbar ist, um mit der aus einem oder mehreren Gegenständen bestehenden zweiten Gruppe in eine anstoßende Beziehung gebracht zu werden, um die zweite Gegenstandsgruppe quer zu der ersten Richtung zu bewegen, und zwar bis der Ladearm an die erste, aus einem oder mehreren Gegenständen bestehende Gruppe anstößt, und um die erste und die zweite Gegenstandsgruppe von einer angrenzenden Kante der Dosier-Fördereinrichtung abzuziehen.

9. Vorrichtung nach Anspruch 8, wobei der Ladearm betätigbar ist, sich in der ersten Richtung zu bewegen, derart, dass die zu der ersten Richtung quer verlaufende Bewegung der ersten und der zweiten Gegenstandsgruppe, die jeweils aus einem oder mehreren Gegenständen besteht, relativ zu den ersten und zweiten Nasen verläuft.

10. Vorrichtung nach einem der Ansprüche 1 bis 9, wobei der erste Schwungriegel durch eine erste Reihe von auf einer ersten Nasen-Kettenanordnung angeordneten Schwungriegeln bereitgestellt ist und der zweite Schwungriegel durch eine zweite Reihe von einer auf einer zweiten Nasen-Kettenanordnung angeordneten Schwungriegeln, wobei aufeinanderfolgende Schwungriegel jener ersten und zweiten Nasen-Kettenanordnung betätigbar sind, um aufeinanderfolgende erste und zweite Gegenstandsgruppen, die jeweils aus einem oder mehreren Gegenständen bestehen, zu fördern, so dass sich auf der Dosier-Fördereinrichtung Ströme der jeweils ersten und zweiten Gegenstandsgruppe ausbilden.

11. Verfahren zur Ausbildung beabstandeter Gruppen von Gegenständen auf einer Fördereinrichtung, wobei das Verfahren das Fördern einer Vorauswahl von Gegenständen bei einer ersten Geschwindigkeit umfasst, und bei einer zweiten Geschwindigkeit das Bewegen eines ersten Schwungriegels in eine anstoßende Beziehung mit einem ersten Abschnitt der Vorauswahl von Gegenständen, um so jenen ersten Abschnitt bei jener zweiten Geschwindigkeit zu fördern, ferner das Bewegen eines zweiten Schwungriegels in eine anstoßende Beziehung mit einem zweiten Abschnitt der Vorauswahl von Gegenständen, um so jenen zweiten Abschnitt bei jener zweiten Geschwindigkeit zu fördern und auf diese Weise zu zwei Gruppen von Gegenständen zu gelangen, die bei jener zweiten Geschwindigkeit in entgegengesetzter Bewegungsrichtung gefördert werden.

12. Verfahren zum Verbringen von Gegenständen in Kartons, wobei das Verfahren das Fördern von Gegenständen auf einer Fördereinrichtung in einem ersten und einem zweiten Strom umfasst, wobei die Gegenstände, die jeweils einen ersten und einen zweiten Strom bilden, voneinander beabstandet sind und der erste Strom relativ zu dem zweiten Strom angeordnet ist, derart, dass die Gegenstände des ersten Stroms versetzt zu den Gegenständen des zweiten Stroms sind, und zwar im Verhältnis zu der Bewegung, in der diese Ströme gefördert werden, wobei das Verfahren weiterhin das Beschleunigen eines Gegenstands in dem zweiten Strom quer zu jener Richtung umfasst, um dadurch den Gegenstand zwischen angrenzenden Gegenständen in dem ersten Strom einzufügen, sowie das Beschleunigen von sowohl des Gegenstands in dem zweiten Strom als auch das Beschleunigen eines angrenzenden Gegenstands in dem ersten Strom über eine Kante der Fördereinrichtung.

## Revendications

1. Appareil comprenant un convoyeur doseur pour transporter une sélection d'articles initiale dans une première direction à une première vitesse, une première barre de poussée et une deuxième barre de poussée, et un moyen d'entraînement pour entraîner les première et deuxième barres de poussée, dans lequel les première et deuxième barres de poussée s'étendent en travers d'une partie du convoyeur et sont disposées en décalage l'une par rapport à l'autre en travers de la première direction, l'appareil pouvant être utilisé pour mettre la première barre de poussée en butée avec une première partie de la sélection d'articles initiale, afin de les transporter à une deuxième vitesse pour former un premier groupe d'un ou de plusieurs articles, et l'appareil pouvant être utilisé pour mettre la deuxième barre de poussée en butée avec une deuxième partie de la sélection d'articles initiale, afin de les transporter à ladite deuxième vitesse pour former un deuxième groupe d'un ou de plusieurs articles, lesquels premier et deuxième groupes d'articles sont décalés l'un par rapport à l'autre dans ladite première direction.

2. Appareil selon la revendication 1, dans lequel la première barre de poussée s'étend depuis un premier agencement de chaîne à taquets placé le long d'un premier côté du convoyeur doseur et la deuxième barre de poussée s'étend depuis un deuxième agencement de chaîne à taquets placé le long d'un deuxième côté, opposé au premier côté, du convoyeur doseur.

3. Appareil selon la revendication 1 ou 2, dans lequel la première barre de poussée et la deuxième barre de poussée peuvent être entraînées indépendamment l'une de l'autre.

4. Appareil selon l'une quelconque des revendications 1 à 3, dans lequel les barres de poussée sont configurées pour leur permettre de se dépasser mutuellement, dans ladite première direction, sans entrer en collision l'une avec l'autre.

5. Appareil selon l'une quelconque des revendications 1 à 4, dans lequel le convoyeur doseur comprend une première partie et une deuxième partie synchronisées entre elles pour fournir, ensemble, une surface de transport pour transporter la sélection d'articles initiale, et dans lequel le premier agencement de chaîne à taquets comprend une chaîne le long de chaque côté de la première partie, et le deuxième agencement de chaîne à taquets comprend une chaîne le long de chaque côté de la deuxième partie.

6. Appareil selon l'une quelconque des revendications 1 à 5, comprenant en outre une arrivée d'articles, à partir de laquelle est faite ladite sélection d'articles initiale, laquelle sélection d'articles initiale est saisie et transférée sur le convoyeur doseur à partir de ladite arrivée, pour être transportée par celui-ci à ladite première vitesse.

7. Appareil selon l'une quelconque des revendications 1 à 6, comprenant en outre un convoyeur supplémentaire placé parallèlement et adjacent à un côté du convoyeur doseur et une station de chargement qui est apte à transférer les groupes d'un ou de plusieurs articles du convoyeur doseur vers le convoyeur supplémentaire.

8. Appareil selon la revendication 7, dans lequel la station de chargement comprend un bras de chargement qui est apte à venir au contact du deuxième groupe d'un ou de plusieurs articles puis à les déplacer transversalement à la première direction, jusqu'à ce que ce bras de chargement vienne au contact du premier groupe d'un ou de plusieurs articles, et à éloigner les premier et deuxième groupes d'un ou de plusieurs articles d'un bord adjacent du convoyeur doseur.

9. Appareil selon la revendication 8, dans lequel le bras de chargement est apte à se déplacer dans ladite première direction, de sorte que le déplacement des premier et deuxième groupes d'un ou de plusieurs articles transversalement à ladite première direction se fait relativement aux premier et deuxième taquets.

10. Appareil selon l'une quelconque des revendications 1 à 9, dans lequel les première et deuxième barres de poussée sont constituées respectivement par une première série de barres de poussée sur un premier agencement de chaîne à taquets et une deuxième série de barres de poussée sur un deuxième agencement de chaîne à taquets, les barres de poussée successives de ces premier et deuxième agencements de chaîne à taquets étant aptes à transporter des premiers et deuxièmes groupes successifs d'un ou de plusieurs articles pour former des flux de chacun desdits premier et deuxième groupes d'un ou de plusieurs articles sur le convoyeur doseur.

11. Procédé de formation de groupes d'articles espacés sur un convoyeur, lequel procédé comprend le transport d'une sélection d'articles initiale à une première vitesse, et l'entraînement d'une première barre de poussée à une deuxième vitesse en contact avec une première partie de cette sélection d'articles, pour transporter cette première partie à ladite deuxième vitesse, et l'entraînement d'une deuxième barre de poussée à cette deuxième vitesse en contact avec une deuxième partie de cette sélection d'articles, pour transporter cette deuxième partie à ladite deuxième vitesse, afin d'obtenir deux groupes d'articles, transportés à ladite deuxième vitesse, décalés dans la direction de leur mouvement.

12. Procédé de chargement d'articles dans des cartons, lequel procédé comprend le transport d'articles en un premier flux et un deuxième flux sur un convoyeur, les articles formant chacun des premier et deuxième flux étant espacés les uns des autres, et le premier flux étant agencé par rapport au deuxième flux de telle manière que les articles de celui-ci sont décalés par rapport à ceux du deuxième flux relativement à la direction dans laquelle ces flux sont transportés, le procédé comprenant en outre le fait d'accélérer un article du deuxième flux transversalement à ladite direction, afin de l'intercaler entre des articles adjacents dans le premier flux, et d'accélérer ledit article du deuxième flux et un article adjacent dans le premier flux par rapport à un bord adjacent du convoyeur.
